# EUROPEAN PATENT APPLICATION

(11) **EP 2 101 533 A2**
(43) Date of publication of application: **16.09.2009**
(21) Application number: 09154997.2
(22) Date of filing: 12.03.2009
(51) Int. Cl.: H04W 28/20

(54) **Method in a mobile station for requesting an extension of the band allocation to a next period**

(30) Priority: 14.03.2008 JP 2008065426
(71) Applicant: Fujitsu Limited, Kawasaki-shi, Kanagawa 211-8588 (JP)
(72) Inventor: Furuta, Daitaro, Kawasaki-shi, Kanagawa 211-8588 (JP)
(74) Representative: Stebbing, Timothy Charles

(57) **Abstract**

Method for requesting the extension of a band allocation to a next period radio communication system where data is transferred from a mobile station to a radio base station in a band allocated by the radio base station at a band allocation period (S12). The mobile station transfers a request for extending a next band allocation period by carrying the request together with the data to be transferred to the radio base station (S13). The request is transferred when the mobile station detects that there is no data to be transferred at a next time. The radio base station extends the next band allocation period based on the request (S14).

## Description

Embodiments of the present invention relate to a radio communication system including a mobile station and a radio base station, the mobile station, the radio base station, and a data transfer method.

In the 3rd Generation Partnership Project (3GPP), a radio communication system by Long Term Evolution (LTE) between a radio base station and a mobile station is proposed.

A packet-switched access method is used in LTE. In Voice over Internet Protocol (VoIP) service, when data is transferred from the mobile station to the radio base station for the first time, an uplink (UL) band is not allocated in the interest of efficient use of radio band (bandwidth). Therefore, the mobile station (UE: User Equipment) that desires to transmit data makes a request for an uplink band allocation by which the mobile station transmits the data to the radio base station (eNB: evolved Node B). Here "band" refers to some amount of resources in the frequency and/or time domain, such as a time slot or frequency sub-carrier(s).

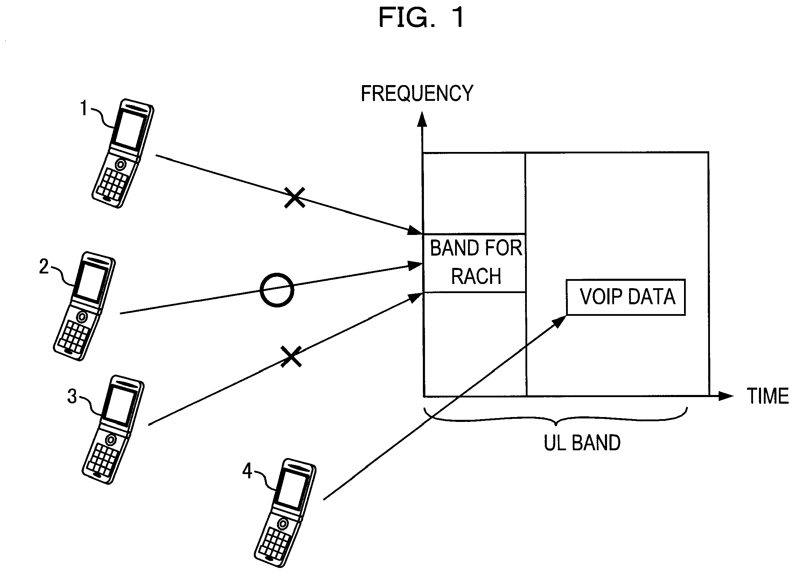

FIG. 1 illustrates a conventional request for uplink band allocation. In FIG. 1, mobile stations 1, 2, and 3 that desire to transmit data make requests for uplink band allocation to the radio base station by using a Physical Random Access Channel (RACH). For example, the request for uplink band allocation of the mobile station 2 is identified by the radio base station. A mobile station 4 has already been an allocated uplink band, and then transmits VoIP data in the allocated uplink band.

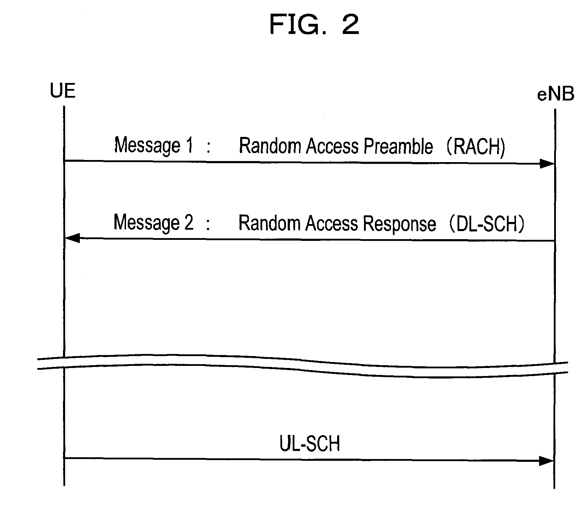

FIG. 2 illustrates a sequence of conventional uplink band allocation. In FIG. 2, in response to the request for uplink band allocation (RACH) from the mobile station (UE) (Message 1), the radio base station (eNB) returns uplink band allocation information to the mobile station by a response (DL-SCH) (Message 2). Accordingly, the mobile station transfers the VoIP data in the uplink band allocated by the above-described allocation (UL-SCH).

For example, a technique related to the radio communication system making the request for uplink band allocation is suggested in which, when a data packet is stored in a queue, a request for uplink band allocation is transmitted, as a piggyback, with the data in a MAC (Media Access Control) expanding header by a variable bit rate signal (such as a VoIP or a compressed image) (see Japanese Laid-Open Patent Publication No. 2002-94533).

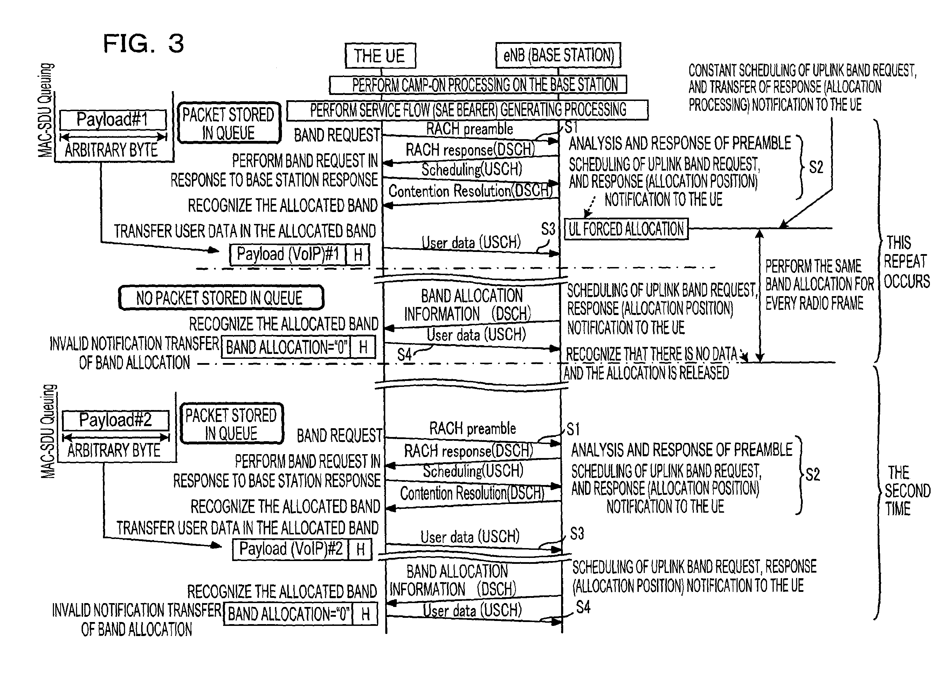

FIG. 3 illustrates a VoIP data transfer sequence according to the conventional technique.

Here, the mobile station does not make a request for uplink band allocation until sound data (e.g. the user's voice) is generated in a silent state, which is a state where there is no sound data.

In step S1, when sound data is generated, the mobile station makes a request for uplink band allocation by using an RACH sequence.

In step S2, the radio base station allocates an uplink band to the mobile station in a given period (for example, 10 msec) in response to the request for uplink band allocation. Unless an instruction is given from the mobile station, the uplink band allocated to the mobile station is maintained.

In step S3, the mobile station transfers the sound data (VoIP data) by using the allocated uplink band.

In step S4, when there is a silent state, the mobile station transmits a request for release of the uplink band allocation to the radio base station.

After that, if the sound data is generated again, processing from step S1 to step S4 is performed again.

In the above-described sequence, when the sound data is generated from the silent state in the mobile station, the RACH sequence is surely generated (step S1). The RACH sequence may not be identified by the mobile base station because of competition with another mobile station. In such a case, transfer of the generated sound data is delayed, so that there is a problem that data transfer efficiency is deteriorated.

Accordingly, it is desirable to provide a radio communication system which may reduce data transfer delay.

According to a first aspect of the invention, a radio communication system including a mobile station and a base radio station is provided. The mobile station transfers data to a radio base station in a band (uplink resource allocation) allocated by the radio base station at a band allocation period, and when the mobile station detects that there is no data to be transferred at a next time, transfers a request for extending a next band allocation period by carrying the request together with the data to be transferred to the radio base station. And the radio base station extends the next band allocation period based on the request.

According to another aspect of the invention, a mobile station of a radio communication system that transfers data to a radio base station in a band allocated by the radio base station at a band allocation period is provided. The mobile station includes a detection unit configured to detect that there is no data to be transferred at a next time, and a transfer unit configured to transfer, to the radio base station, a request for extending a next band allocation period by carrying the request together with data to be transferred at a present time when the detection unit detects that there is no data to be transferred at the next time (e.g. during the next time period for operation defined in the system, such as a frame period).

According to another aspect of the invention, a radio base station of a radio communication system where data is transferred from a mobile station to the radio base station in a band allocated by the radio base station at a band allocation period is provided. The radio base station includes an extracting unit configured to extract a request from data carried together with the request for extending a next band allocation period transferred from the mobile station, and a period extending unit configured to extend the next band allocation period based on the request extracted by the request extracting unit.

According to another aspect of the invention, a data transfer method of a radio communication system where a mobile station transfers data to a radio base station in a band allocated by the radio base station at a band allocation period is provided. The data transfer method includes transferring a request for extending a next band allocation period by carrying the request together with data to be transferred to the radio base station, and extending the next band allocation period by the radio base station based on the request.

Additional features and advantages of the invention will be set forth in part in the description which follows, and in part will be obvious from the description, or may be learned by practice of the embodiments.

It is to be understood that both the foregoing summary description and the following detailed description are exemplary and explanatory and are not restrictive of the embodiments, as claimed.

Embodiments are illustrated by way of example and not limited by the following figures. In the drawings:-

FIG. 1 illustrates a conventional request for uplink band allocation;

FIG. 2 illustrates a sequence for conventional uplink band allocation;

FIG. 3 illustrates a VoIP data transfer sequence according to the conventional technique;

FIG. 4 illustrates a protocol stack configuration example of an embodiment of a mobile station and a radio base station;

FIG. 5 illustrates a format of an embodiment of MAC-PDU;

FIG. 6 illustrates a VoIP data transfer sequence of an embodiment of a radio communication system;

FIGS. 7A and 7B illustrate a flowchart for an uplink band allocation request processing performed by a mobile station;

FIGS. 8A, 8B and 8C illustrate flowcharts of processing performed by a radio base station;

FIG. 9 illustrates a sequence for indicating uplink band allocation timing;

FIGS. 10A and 10B illustrate an embodiment of a mobile station.

Hereinafter, examples of embodiments of the disclosed radio communication system including a mobile station and a radio base station will be described with reference to the drawings.

### <Overview of embodiments>

According to the present embodiments, for VoIP service or the like, when VoIP data is transferred from a mobile station to a radio base station at a given period (for example, a 10 msec radio frame period), if a silent state is detected in the mobile station, a next band allocation period, as MAC control information, is carried together with the VoIP data. And the radio base station performs a next uplink band allocation at the next band allocation period. In this way, the uplink band allocation (resource allocation in units of time and/or frequency) may be performed dynamically and quickly without performing useless data transfer while reducing extra uplink allocation.

Moreover, in the present embodiments, the mobile station may change the next band allocation period. Therefore, the mobile station may be allocated an uplink band by the radio base station without occurrence of an RACH sequence when an uplink band allocation is needed. In addition, since the next band allocation period may be extended, the band may be used efficiently.

The next allocation period, at which the next uplink band allocation is performed by the radio base station when no silent state is detected in the mobile station, is determined by a system parameter (experience value). In the following description, a radio frame period (for example, 10 msec) is used as the next band allocation period when no silent state is detected in the mobile station.

When the silent state is detected for the first time, after the last uplink band allocation is performed by the radio base station, the next uplink band allocation is performed by the radio base station at the next band allocation period as, for example, 50 msec (or 20 msec).

When the silent state is detected continuously two times, the next uplink band allocation is performed by the radio base station at the next allocation period as, for example, 100 msec.

When the silent state is detected continuously three times, the next uplink band allocation is performed by the radio base station at the next allocation period as, for example, 200 msec.

When the silent state is detected continuously four times, the next uplink band allocation is performed by the radio base station at the next allocation period as, for example, 1 sec.

Furthermore, if sound data is suddenly generated when the next allocation period happens to be a long period (for example, 100 msec or 200 msec), there is no problem in use because the delay is only several hundreds of milliseconds even though the generated sound data is buffered in a queue.

That is, if the radio base station decodes period request information, which indicates the request for the next band allocation period, that is, the request from the mobile station that the radio base station change the next band allocation period, carried together with the VoIP data, the next band allocation period requested by the mobile station may be recognized. Therefore, it may be unnecessary to use the band for a request message for the next band allocation period by carrying the period request information together with the last VoIP data before being the silent state.

### <Protocol stack configuration of mobile station and radio base station>

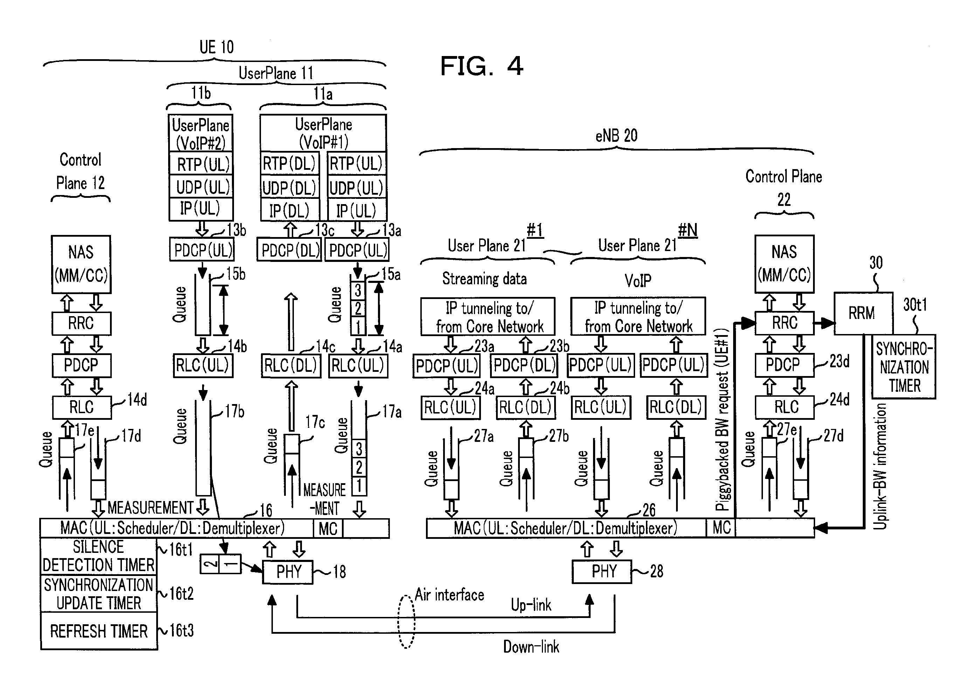

FIG. 4 illustrates a protocol stack configuration of an embodiment of a mobile station and a radio base station. In FIG. 4, a mobile station (UE) 10 has a user plane 11 and a control plane 12. The user plane 11 assumes, for example, a case of connecting a plurality of users, and has a user plane 11a and a user plane 11b. The user plane 11a has an uplink (UL) and a downlink (DL). The user plane 11b has an uplink (UL).

In the uplink of the user planes 11a and 11b, queues (data buffer) 15a and 15b are provided between PDCP (Packet Data Convergence Protocol) layers 13a, 13b and RLC (Radio Link Control) layers 14a, 14b. Furthermore, queues 17a and 17b are provided between RLC layers 14a, 14b and a Medium Access Control (MAC) layer 16.

Furthermore, in the downlink of the user plane 11a, a queue 17c is provided between an RLC layer 14c and the MAC layer 16. In a control plane 12, queues 17d and 17e are provided between an RLC layer 14d and the MAC layer 16.

Data is collected from the queues 17a and 17b at a time of transfer to a physical layer 18 from the MAC layer 16, and then MAC-PUD (Protocol Data Unit) is generated. At this time, MAC control information (MC) is generated in the MAC layer 16 and is integrated into the MAC-PDU at the time of being transferred to the physical layer 18. The MAC control information (MC) includes information such as band request information and period request information. Here, the band request information indicates the request for the uplink band allocation, that is, the request from the mobile station that the radio base station performs the uplink band allocation of the mobile station.

In the MAC layer 16 of the mobile station 10, the silent state is detected based on the fact, as for example a true determination condition, that there is no stored data in both the queues 15a, 15b and the queues 17a, 17b, and that a silent state detection timer 16t1 of the user plane times out. When the silent state is detected, the period request information is inserted into such an area (a field specified in a format) of the MAC control information (MC). The silent state detection timer 16t1 is a timer that is generated by the MAC layer 16 for every bearer (user plane).

The radio base station (eNB) 20 includes a plurality of user planes 21#1 to 21#512 and a control plane 22. In the uplink and the downlink of each user plane 21, queues 27a and 27b are provided between RLC layers 24a, 24b and the MAC layer 26.

The MAC control information (MC) is recognized and decoded only in the MAC layers 16 and 26. Therefore, in the radio base station 20, the MAC control information (MC) is transferred as band request information or period request information not through a queue 27e, an RLC layer 24d, and a PDCP layer 23d to an RRC layer 29 of the control plane 22 from the MAC layer 26, and is supplied to an RRM layer 30.

The RRM layer 30 starts the silent state detection timer 16t1 for each of the user planes 21#1 to 21#512 based on the band request information or the period request information, and performs uplink band allocation processing on the mobile station at a next allocation timing.

### <MAC-PDU format>

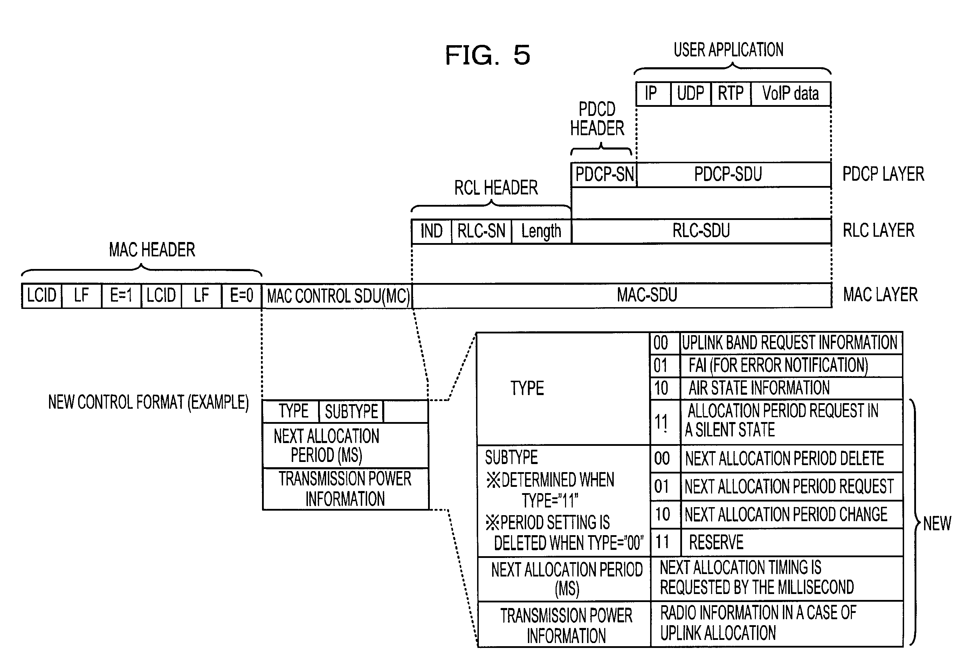

FIG. 5 illustrates a format of an embodiment of MAC-PDU used in a MAC layer. In FIG. 5, the MAC-PDU has a MAC header, a MAC control Service Data Unit (SDU), and a MAC-SDU.

The MAC-SDU is configured to add a header and an RLC header to user application data that includes the VoIP data.

The MAC-SDU indicates the above-described MAC control information (MC) having four types, four subtypes, a next band allocation period, and transmission power information. The type notifies that a binary display'00' indicates a request for uplink band allocation (abbreviated as "band request"), and notifies that a binary display '11' indicates a request for a next band allocation period in silent state (abbreviated as "period request"). In this case, the following subtype is effective.

The subtype notifies, for example, that the binary display'00' indicates that the allocated period is cancelled.

The subtype notifies that a binary display'01' indicates that the next band allocation period is actually requested. Only at this time, "next band allocation period" is effective.

When a period as "next band allocation period" has passed, the radio base station puts the uplink band allocation information of the mobile station in the control channel of the downlink for notification. The mobile station may detect that it has been allocated the uplink band because the control channel of the downlink is decoded as needed.

The subtype notifies that a binary display'10' indicates that the next band allocation period is changed. The band allocation period may be changed by using this format.

Moreover, when the binary display for type is '00' indicating the band request, it is usually possible to process the VoIP data as a fixed length. Thus, a value of the requested uplink band is not required to be set. If necessary, the value of the requested uplink band is set in a column of the "next band allocation period."

### <Operation sequence>

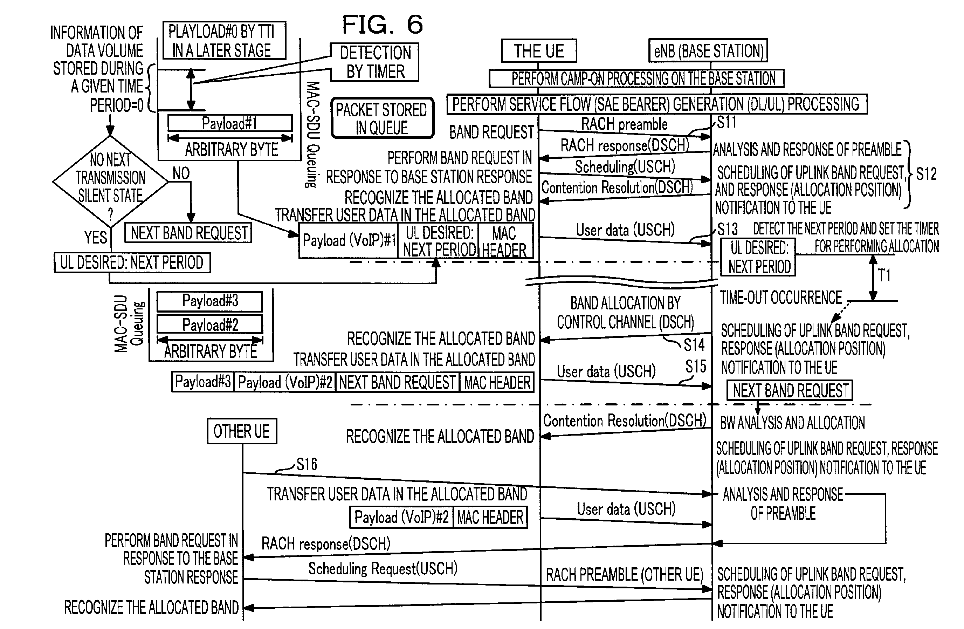

FIG. 6 illustrates a VoIP data transfer sequence of an embodiment of a radio communication system.

In step S11, when sound data is generated, the mobile station makes the band request by using the RACH sequence.

In step S12, the radio base station allocates an uplink band to the mobile station in response to the band request. Unless an instruction is given from the mobile station, the uplink band allocated to the mobile station is maintained by the radio base station.

In step S13, the mobile station transfers the sound data (VoIP data) by using the allocated uplink band.

In this case, to detect a silent state of the user plane 11a, when RLC-SDU data is stored in queues 17a and 17b and there is no PDCP-PDU data stored in queues 15a and 15b, the mobile station sets the silent state detection timer 16t1 to, for example, 10 msec to be started by coinciding with the radio frame period (10 msec). When the silent state detection timer 16t1 times out and there is no data stored in the queues 17a, 17b, 15a, and 15b, the mobile station determines that the silent state is detected.

The silent state detection timer 16t1 is provided for every bearer (user plane) in the MAC layer 16. That is, the silent state detection of the user plane 11a is performed when the silent state detection timer 16t1 times out in a state where there is no data stored in the queues 17a, 17b, 15a, and 15b.

After the above-described silent state detection is performed, in step S13, the period request information of a period (for example, 50msec) requested as a next band allocation period is transmitted to the radio base station from the mobile station by being carried together with the sound data (VoIP data) as MAC control information.

In step S14, in the radio base station, the next band allocation period comes after the time (T1) notified by the period request information, and the uplink band allocation of the mobile station is delayed accordingly. At this time, the band to be allocated is assumed to be the same as the preceding allocation band.

That is, in the RRM layer 30 of the radio base station, a next band allocation period (T1) of the mobile station is measured by a periodic timer 30t1. Then the uplink band allocation information is notified by the downlink (DL-SCH) when the periodic timer 30t1 times out.

In step S15, the mobile station recognizes that uplink band allocation is performed at the time (the time T1 notified in advance by the period request information) desired by the mobile station itself, and then collectively transmits Payloads #2 and #3 of the VoIP data generated next to the radio base station.

At this time, the RACH sequence is not performed. Furthermore, the time desired by the mobile station itself indicates data volume of the VoIP data that may be stored in the queues 17a, 17b, 15a, and 15b included in the mobile station.

If the queues overflow in this case, the mobile station may perform shaping. As for VoIP and the like, such processing is performed because there is no problem even if a packet is delayed or discarded. As for VoIP, even though a regular transfer frame interval is 10 msec or more, the volume is approximately 480 bytes even if the transfer is performed in the interval of 60 msec. Thus, the interval may be extended up to 120 msec where a Max Transfer Unit (MTU) value is usually 1500 bytes. In the case of 180 msec, transfer is possible only if the queue capacity is enough.

In this manner, when the mobile station recognizes that the uplink band allocation is performed at the time desired by the mobile station itself, the mobile station transmits the VoIP data generated next to the radio base station. At this time, the RACH sequence is not performed. Therefore, when another mobile station makes a request for uplink band allocation by using the RACH sequence in step S16, the probability of this RACH sequence competing with the RACH sequence of another mobile station communicating with the radio base station becomes lower. Thus, data transfer delay may be reduced.

### <Processing of mobile station>

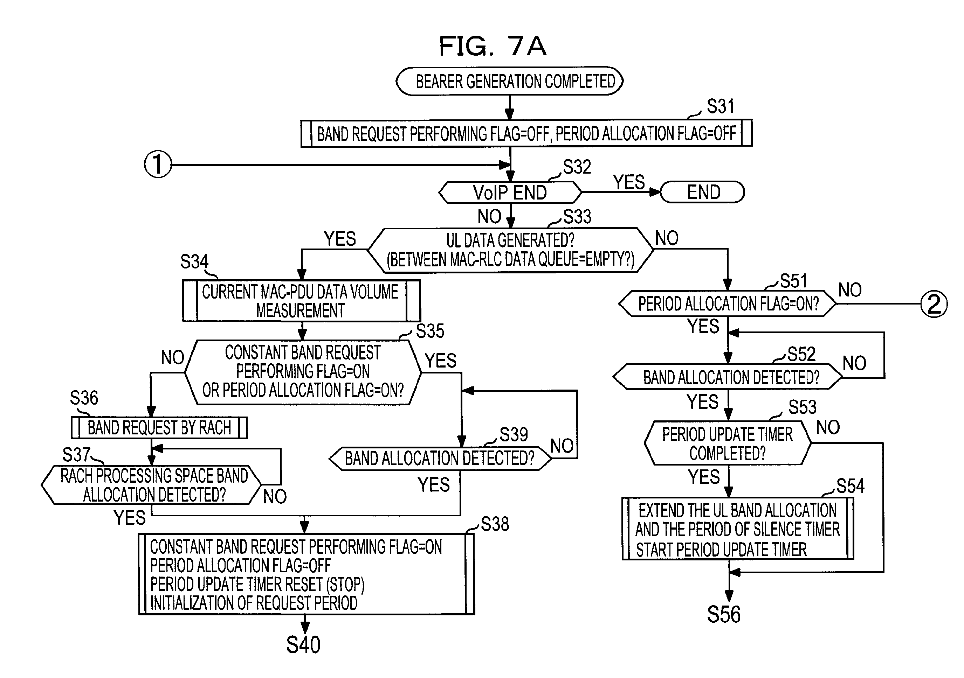

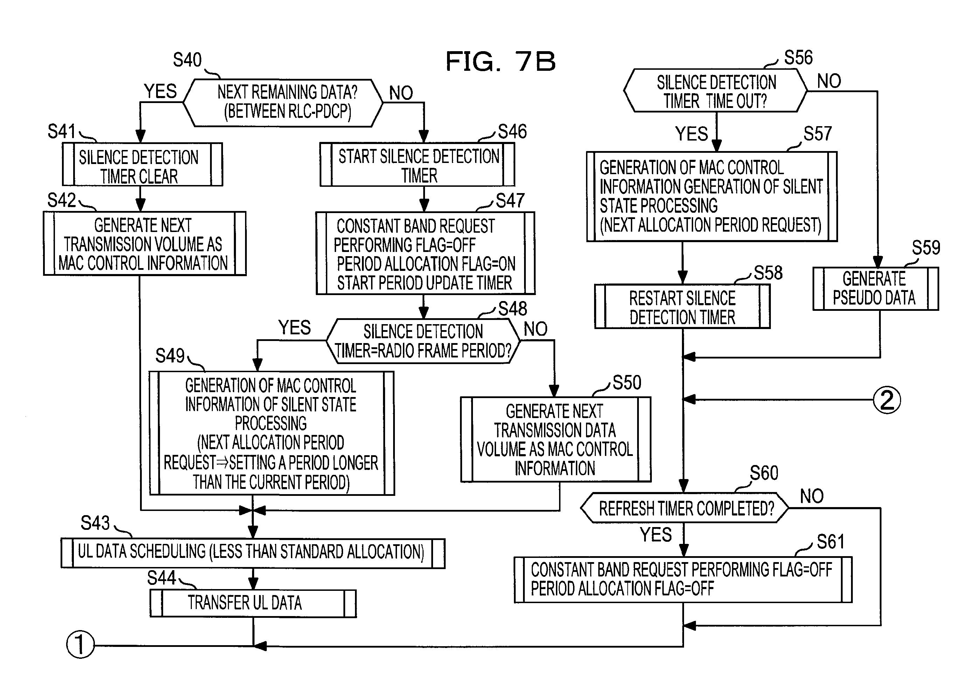

FIGS. 7A and 7B illustrate a flowchart of processing for making the request for the uplink band allocation performed by the mobile station. The processing is configured to generate and transfer the MAC control information that makes the request for the next band allocation period when the mobile station recognizes a silent state (a state where there is no data).

As illustrated in FIGS. 7A and 7B, in step S31, the mobile station turns off a band request flag which is a flag of the processing to make the request for the uplink band allocation by carrying together with the VoIP data. Furthermore, the mobile station turns off a period request flag which is a flag of the processing to make the request for the period (delay time) from the allocation to the next allocation.

In step S32, the mobile station determines whether or not the VoIP is ended. If NO, in step S33, the mobile station determines whether or not uplink data (UL data) has been generated.

If the uplink data has been generated, the mobile station calculates the data volume of the current MAC-PDU in step S34. Next, in step S35, the mobile station determines whether the band request flag is turned on, or whether the period request flag is turned on.

If the first VoIP data is generated, the mobile station performs the request for the uplink band allocation by the RACH processing in step S36, and then detects the uplink band allocation from the radio base station in step S37. Then the process goes to step S38.

On the other hand, in step S35, if the band request flag is turned on or the period request flag is tuned off, the mobile station detects the uplink allocation from the radio base station in step S39. Then the process goes to step S38.

In step S38, the mobile station turns on the constant band request flag and turns off the period request flag. Furthermore, the mobile station performs initialization of the request period by resetting and stopping a period update timer 16t2. The period update timer 16t2 is a timer generated for every bearer (user plane) by the MAC layer 16, and has a value, that is automatically set, that is n times (for example, n is a value of 2 to 8) of the set value (for example, 10 msec) of the silent state detection timer 16t1.

Next, in step S40, the mobile station determines whether or not the next sound data remains in the queues 15a and 15b. If the sound data remains, the mobile station clears the silent state detection timer 16t1 in step S41. In step S42, the mobile station has the MAC control information (type '00') that the next transmission data volume (sound data remaining volume of the queues 17a and 17b) is a volume of the band request, and generates a MAC-PDU, shown in FIG. 5, on which the sound data is carried together with the MAC-SDU.

After that, the mobile station performs scheduling of the uplink data in step S43, and then transfers the uplink data in step S44. Then the process goes to step S32.

If no sound data remains in step S40, the mobile station starts the silent state detection timer 16t1 in step S46. In step S47, the mobile station turns off the band request flag and turns on the period request flag. The mobile station further starts the period update timer 16t2.

Next, in step S48, the mobile station determines whether the set value of the silent state detection timer 16t1 coincides with the radio frame period. If YES, the mobile station sets the set value of the next uplink band allocation period and the silent state detection timer 16t1 to, for example, 50 msec. Accordingly, the mobile station sets the set value of the period update timer 16t2 to nx50 msec, and then generates the period request information, that is, MAC control information (type '11') of silent state processing. Then the mobile station performs scheduling of uplink data in step S43, and then transfers the uplink data in step S44. Then the process goes to step S32.

If NO in step S48, the mobile station generates the next transmission data volume, that is, the MAC control information (type '00') in that the uplink band is the minimum. Then the mobile station performs scheduling of the uplink data in step S43, and then transfers the uplink data in step S44. Then the process goes to step S32.

On the other hand, if no uplink data is generated in step S33, the mobile station determines whether or not the period request flag is tuned on. If YES, the process goes to step S52. If the period request flag is turned off, the process goes to step S60. The path to go to step S60 is provided only for the first time, that is, for performance of the band request of the RACH sequence.

In step S52, the mobile station detects the uplink band allocation from the radio base station. The process goes to step S53 only if the uplink band allocation is detected.

In step S53, the mobile station determines the time-out of the period update timer 16t2. The process goes to step S54 only if the period update timer 16t2 times out. In step S54, the mobile station extends and updates the set value of the next uplink band allocation and the silent state detection timer 16t1 to 100 msec (in case where the last set value is 50 msec), 200 msec (in case where the last set value is 100 msec), or 1 sec (in case where the last set value is 200 msec). Accordingly, the mobile station extends and updates the set value of the period update timer 16t2, and then starts this period update timer 16t2.

Next, in step S56, the mobile station determines whether or not the silent state detection timer 16t1 times out. If the silent state detection timer 16t1 times out, in step S57, the mobile station generates period request information, that is, MAC control information (type '11') of silent state processing by using the next uplink band allocation period. At this time, payload part (the MAC-SDU part in FIG. 5) is embedded with invalid data. In step S58, the mobile station restarts the silent state detection timer 16t1.

On the other hand, if the silent state detection timer 16t1 does not time out in step S56, the mobile station generates pseudo data (embedded by invalid data) in step S59. Even though the silent state detection timer 16t1 corresponds to the uplink band allocation period, the timing of each timer is shifted less often because the mobile station and the radio base station uses different timers. Therefore, step S59 may be performed. However, data transfer efficiency may be improved because the pseudo data is transferred less often.

After that, in step S60, the mobile station determines whether or not a refresh timer 16t3 times out. If the refresh timer 16t3 times out, the mobile station turns off the constant band request flag and turns off the period request flag. After that, the process goes to step S32. The refresh timer 16t3 is a timer that is generated for every bearer (user plane) by the MAC layer 16 and is provided to newly restart the processing from the RACH sequence after the silent state processing is performed for the uplink band allocation period as a long period (for example, 100 msec or 200 msec) for a given time period of approximately a few minutes to ten minutes. Step S60 and step S61 do not always have to be provided.

### <Processing of radio base station>

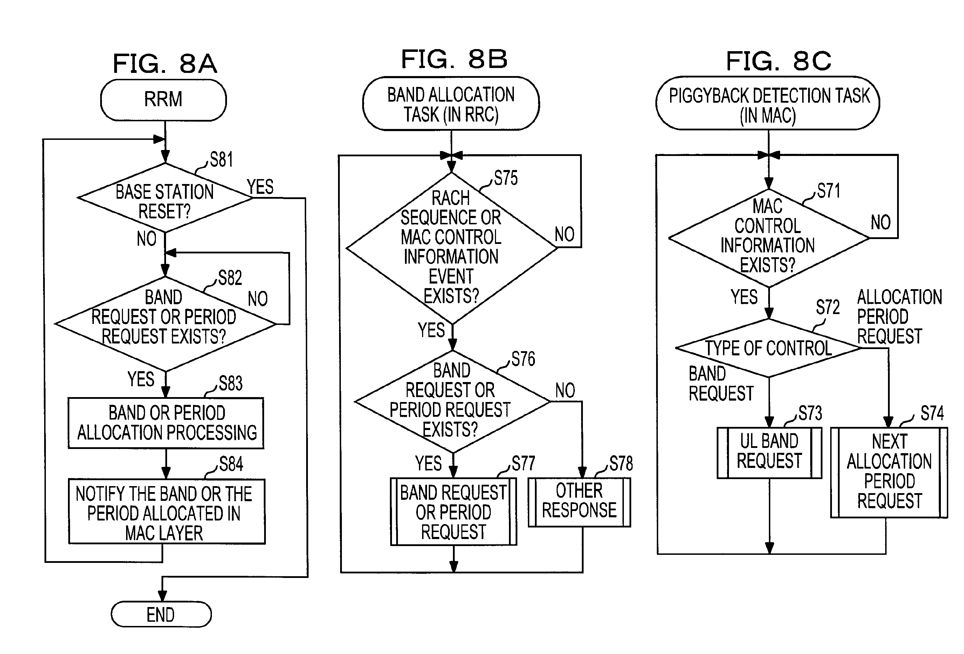

FIGS. 8A, 8B and 8C illustrate flowcharts of processing performed by a radio base station. The processing performed by the radio base station includes three tasks. That is, the tasks include processing of an RRM layer 30 shown in FIG. 8A, processing of an RRC layer 29 shown in FIG. 8B, and a MAC layer 26 shown in FIG. 8C.

In FIG. 8C, the MAC layer 26 determines whether or not the signal received from the mobile station includes the MAC control information in step S71. If YES, the MAC layer 26 determines the type of the MAC control information in step S72. If the type of MAC control information is the band request information, the MAC layer 26 notifies the band request to the RRC layer 29 in step S73. On the other hand, if the type of MAC control information is the period request information in the silent state, the MAC layer 26 notifies the period request to the RRC layer 29.

In FIG. 8B, the RRC layer 29 determines whether or not there is an event of the RACH sequence or the MAC control information in step S75. If there is an event of the RACH sequence or the MAC control information, the RRC layer 29 determines whether or not there is a band request or a period request in the above-described event in step S76. If YES, the RRC layer 29 notifies the band request or the period request to an RRM layer 30 in step S77. On the other hand, if NO, the RRC layer 29 responses according to other events in step S78.

In FIG. 8A, the RRM layer 30 determines whether or not the base station is reset in step S81. If NO, the RRM layer 30 determines whether or not there is a band request or a period request in step S82. If YES, the process goes to step S83. In step S83, processing of a band allocation or a period allocation is performed. After that, the allocated uplink band or uplink band allocation period is notified to the MAC layer 26 in step S84.

### <Uplink band allocation timing>

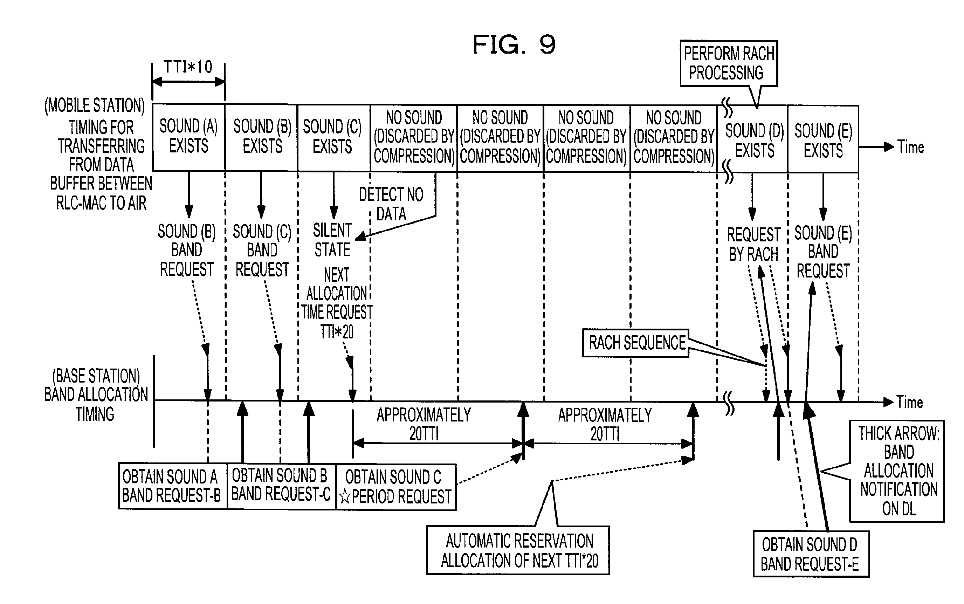

FIG. 9 illustrates a sequence for describing uplink band allocation timing. In this case, it is assumed that the radio frame period is TTI (for example, TTI= 10 msec). Furthermore, it is assumed that the silent state detection timer period is 10 msec first.

To transmit the uplink together with a sound (A) from the mobile station, the mobile station notifies the radio base station of the MAC control information for the band request of a sound (B) to be transmitted next by carrying the MAC control information together with the VoIP data. Furthermore, to transmit the uplink together with the sound (B), the mobile station notifies the radio base station of the MAC control information for the band request of a sound (C) to be transmitted next by carrying the MAC control information together with the VoIP data.

To transmit the uplink together with the sound (C) from the mobile station, the mobile station notifies the radio base station of the MAC control information for requesting, for example, 20 msec as the next band allocation period by carrying the MAC control information together with the VoIP data because the silent state detection is performed.

The radio base station that receives the period request information starts the periodic timer based on the period request information, and then transmits the downlink control channel together with the uplink band allocation information at the next allocation timing.

The mobile station that receives the uplink band allocation information transmits invalid data by carrying the invalid data together with the next band allocation period if there is no sound data. If there is sound data, the mobile station transmits the sound data by carrying the sound data together with the band request to the radio base station.

When refreshing is performed, no period request is given until data is generated, and then the mobile station makes a band request by the RACH sequence upon generation of a sound (D).

As a result, the operation seems as if the radio base station and the mobile station exchange data for the first time. This refresh processing looks like synchronization. For example, the refresh processing is used to prevent problems of the periodic timer on the radio base station side.

### <Configuration of mobile station>

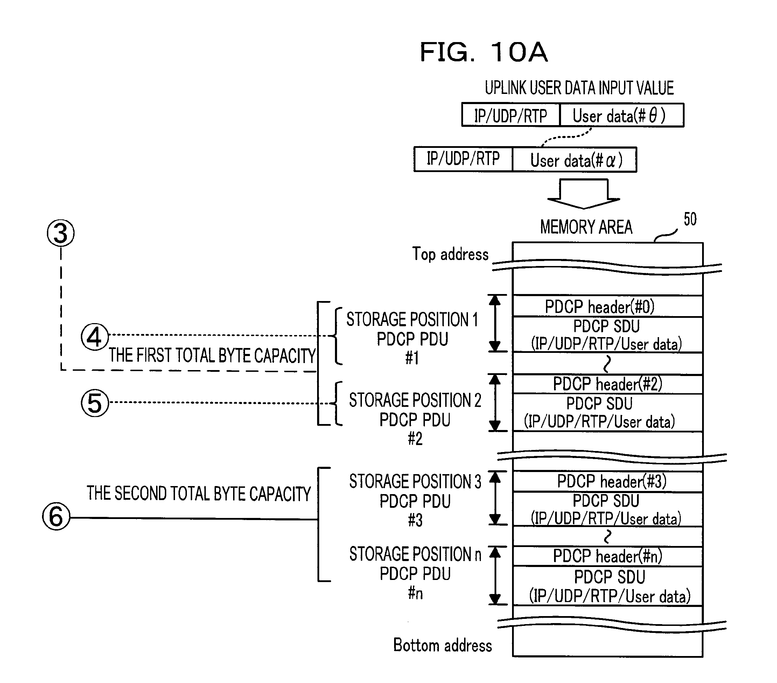

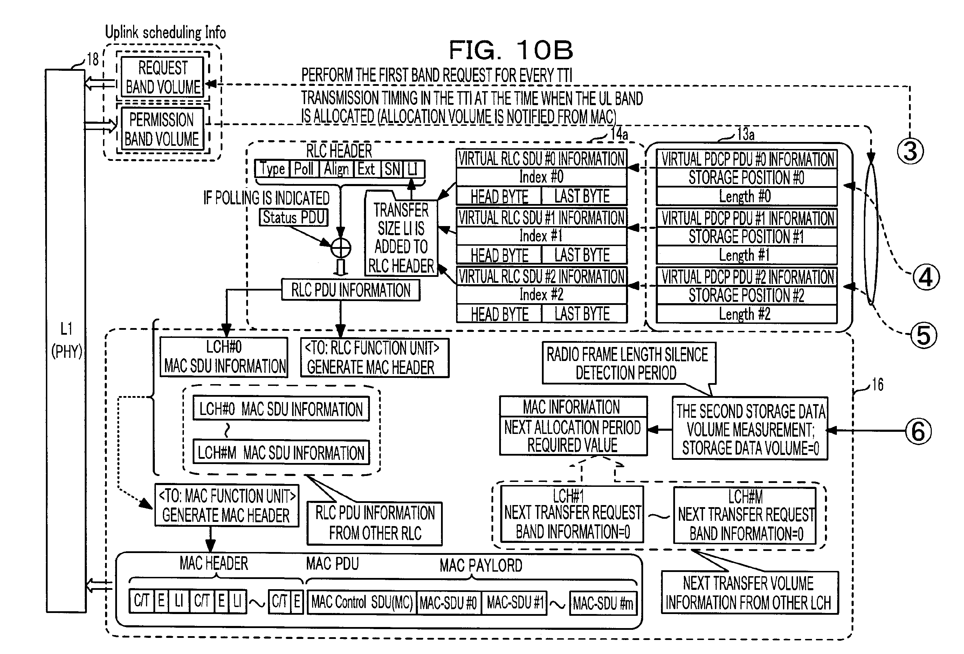

FIGS. 10A and 10B illustrate an embodiment of a mobile station. In FIGS. 10A and 10B, the same parts as in FIG. 4 are indicated by the same reference numerals. In FIGS. 10A and 10B, input data is stored in a memory area 50. A PDCP layer 13a generates a PDCP payload to be transmitted at one time from the input data stored in the memory area 50, and then supplies the PDCP payload to an RLC layer 14a. The RLC layer 14a generates a PLC header of the PLC payload from the above-described PDCP payload information, and then supplies the PLC header as PLC-PDU information to the MAC layer 16.

The MAC layer 16 generates a MAC header of the MAC-PDU by generating the MAC-SDU information from the above-described PLC-PDU information. Furthermore, in a state where the data to be transmitted next is not stored in the memory area 50, the MAC layer 16 generates the MAC control SUD of the period request information in that the next band allocation period is, for example, 20 msec. The MAC layer 16 transfers and transmits the MAC-PDU that includes the above-described MAC header, the MAC control SDU, and the MAC-SDU to the physical layer 18.

According to the above-described embodiment, the data transfer delay may be reduced.

In the above-described embodiment, the transfer of VoIP data is described as an example. However, the embodiment is not limited to the case of sound data. The embodiment may also be applicable to the case where the data to be transferred is of a bursty nature.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments have been described in detail, it should be understood that the various changes, substitutions, and alterations could be made hereto without departing from the scope of the claims.

## Claims

1. A radio communication system comprising:
a mobile station arranged for transferring data to a radio base station in a band allocated by the radio base station at a band allocation period, and when the mobile station detects that there is no data to be transferred at a next time, arranged to transfer a request for extending a next band allocation period by carrying the request together with the data to be transferred to the radio base station; and
the radio base station, which is arranged to extend the next band allocation period based on the request.

2. The radio communication system according to claim 1, wherein the mobile station is arranged to transfer another request for further extending the next band allocation period by carrying the other request together with invalid data to the radio base station when the mobile station continuously detects that there is no data to be transferred at a next time.

3. A mobile station of a radio communication system for transferring data to a radio base station in a band allocated by the radio base station at a band allocation period, the mobile station comprising:
a detection unit configured to detect that there is no data to be transferred at a next time; and
a transfer unit configured to transfer, to the radio base station, a request for extending a next band allocation period by carrying the request together with data to be transferred at a present time when the detection unit detects that there is no data to be transferred at the next time.

4. The mobile station according to claim 3, wherein when the detection unit continuously detects that there is no data to be transferred at a next time, the transfer unit is arranged to transfer another request for further extending the next band allocation period by carrying the other request together with invalid data.

5. A radio base station of a radio communication system where data is transferred from a mobile station to the radio base station in a band allocated by the radio base station at a band allocation period, the radio base station comprising:
an extracting unit configured to extract a request from data carried together with the request for extending a next band allocation period transferred from the mobile station; and
a period extending unit configured to extend the next band allocation period based on the request extracted by the request extracting unit.

6. A data transfer method of a radio communication system where a mobile station transfers data to a radio base station in a band allocated by the radio base station at a band allocation period, comprising:
transferring a request for extending a next band allocation period by carrying the request together with data to be transferred to the radio base station; and
extending the next band allocation period by the radio base station based on the request.

7. The data transfer method according to claim 6, wherein the request for extending a next band allocation period is transferred when the mobile station detects that there is no data to be transferred at a next time.

8. The data transfer method according to claim 7, further comprising transferring another request for further extending the next band allocation period by carrying the other request together with invalid data when the mobile station continuously detects that there is no data to be transferred at a next time.

9. Software which, when executed by a mobile station and a base station in a radio communication system, performs the method according to any of claims 6 to 8.

10. A computer-readable medium on which is stored the software according to claim 9.
